Europäisches Patentamt

European Patent Office

Office européen des brevets

(19)

(11) Veröffentlichungsnummer: **0 218 601**
**B1**

(12) # EUROPÄISCHE PATENTSCHRIFT

(45) Veröffentlichungstag der Patentschrift:
25.01.89

(51) Int. Cl.⁴: **B 01 D 3/10**, B 01 D 53/14

(21) Anmeldenummer: 86901328.4

(22) Anmeldetag: 11.03.86

(86) Internationale Anmeldenummer:
PCT/CH 86/00034

(87) Internationale Veröffentlichungsnummer:
WO 86/05704 (09.10.86 Gazette 86/22)

(54) **REGENERIERUNGSEINRICHTUNG.**

(30) Priorität: 02.04.85 CH 1421/85

(43) Veröffentlichungstag der Anmeldung:
22.04.87 Patentblatt 87/17

(45) Bekanntmachung des Hinweises auf die Patenterteilung:
25.01.89 Patentblatt 89/4

(84) Benannte Vertragsstaaten:
DE IT

(56) Entgegenhaltungen:
EP-A-0 107 046
US-A-2 363 247
US-A-3 317 405
US-A-4 070 167

(73) Patentinhaber: **MEIER, René, Reckenbühlstrasse 21,
CH- 6005 Luzern (CH)**

(72) Erfinder: **MEIER, René, Reckenbühlstrasse 21, CH-
6005 Luzern (CH)**

(74) Vertreter: **Reichmuth, Hugo Werner, INVENTIO
AG Seestrasse 55, CH- 6052 Hergiswil/NW (CH)**

EP 0 218 601 B1

## Beschreibung

Die Erfindung bezieht sich auf eine Regenerierungseinrichtung für einen Trägerstoff, zum Trennen eines vom Trägerstoff absorbierten Schadstoffes, wobei die Einrichtung einen Vakuumverdampfer, einen Kondensator, eine Vakuumpumpe, ein Füllventil, ein Ablassventil, eine für den Kreislauf vorgesehene Umwälzpumpe und die nötigen Verbindungsleitungen aufweist.

Mit der DE-OS-3 402 287 ist die Anordnung einer Überfüllsicherung in einer Lösungsmittelaufbereitungsanlage bekanntgeworden. Die darin erwähnte Lösungsmittelaufbereitungsanlage hat die Aufgabe, aus fett-, farb- oder harzverschmutzten Waschlösungen die Lösungsmittel durch Eindampfprozesse zurückzugewinnen. Die Waschlösung wird durch den in einem Vakuumverdampfer herrschenden Unterdruck in den Verdampfungsraum gesogen. Hier wird das Lösungsmittel bei einer niedrigen Temperatur verdampft. Der Abdampf wird durch die Vakuumpumpe gegen Atmosphäre verdichtet und in einem Kondensationsraum eines Wärmetauschers für die Wiederverwendung in flüssiger Form zurückgewonnen. Die sich im unteren Teil des Verdampfungsraumes ansammelnden Rückstände werden in zähflüssigem Zustand dem Abfall zugeführt.

Mit der EP-OS 0 107 046 ist ein Verfahren bekanntgeworden, bei welchem saure Gase von einem Erdgas abgetrennt werden. Die für die Absorption der Schadstoffe aus dem Erdgas erforderliche wässerige Absorptionsflüssigkeit führt einen kontinuierlichen Kreislauf durch eine Einrichtung mit einer Absorptions- und einer Desorptionszone durch. Das Rohgas wird durch einen Absorptionsturm gesogen, wobei die Absorptionsflüssigkeit im Gegenstrom die Schadstoffe in einer in mehrere Reinigungsstufen aufgeteilten Zone des Absorptionsturmes aufnimmt. Die mit Schadstoffen angereicherte Absorptionsflüssigkeit sammelt sich im Sumpf des Absorptionsturmes und wird anschliessend in der Desorptionszone in einer oder in mehreren Entspannungsstufen der Anlage regeneriert. Dabei werden der Absorptionsflüssigkeit durch eine Entspannungsverdampfung die Schadstoffe weitgehend wieder entzogen. Die gereinigte Absorptionsflüssigkeit fliesst aus der letzten Entspannungsstufe und wird durch eine Umwälzpumpe über eine Verbindungsleitung wieder dem Absorptionsturm für eine erneute Aufnahme von Schadstoffen zugeführt.

Ein Nachteil der bekannten Einrichtungen liegt darin, dass ein völliges Entziehen der absorbierten Schadstoffe aus dem Absorptionsmittel nur mit einem überaus grossen technischen Aufwand möglich ist.

Der Erfindung liegt die Aufgabe zugrunde, eine Einrichtung zum Regenerieren eines Trägerstoffes vorzuschlagen, durch welche die Desorption des Trägerstoffes und die Aufnahmefähigkeit für neue Schadstoffe verbessert werden kann.

Diese Aufgabe wird durch die in den Ansprüchen gekennzeichnete Erfindung gelöst.

Die durch die Erfindung erreichten Vorteile sind im wesentlichen darin zu sehen, dass durch den Einsatz eines an sich bekannten, zwischen der Verdampfungszone des Vakuumverdampfers und der für die Beschickung des Absorptionsturmes mit neuem Trägerstoff verantwortlichen Umwälzpumpe angeordneten Mikrowelleneinsatzes, dem Trägerstoff weitere Schadstoffe entzogen werden können, ohne den Trägerstoff dabei wesentlich zu erwärmen.

Auf beiliegender Zeichnung ist ein Ausführungsbeispiel der Erfindung dargestellt, das im folgenden näher erläutert wird. Es zeigt:

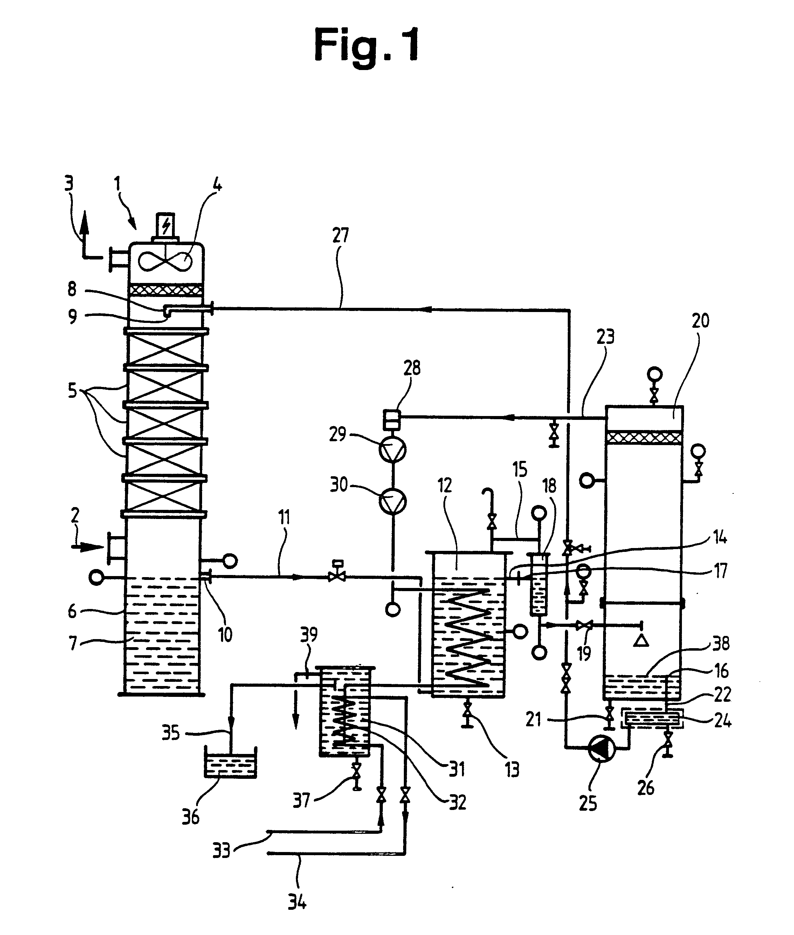

Fig. 1 eine schematische Darstellung einer Abluft-Reinigungsanlage.

In der Fig. 1 ist mit 1 ein Absorptionsturm bezeichnet, welcher einen Rohgas-Einlass 2, einen Reingas-Auslass 3, einen Abzug-Ventilator 4, eine Anzahl Reinigungsstufen 5, einen Sumpf 6 für einen gesättigten Trägerstoff 7, einen Einlass 8 für einen reinen Trägerstoff 9 und einen Überlauf 10 für den gesättigten Trägerstoff 7 aufweist. Der gesättigte Trägerstoff 7 gelangt über eine Vorlaufleitung 11 in einen Vorwärmer und Kondensator 12 mit einem Ablassventil 13, einem Überlauf 14 und einer Ausgleichsleitung 15. Der Überlauf 14 ist mit einem Einlauf 17 eines Heizrohres 18 verbunden. Ein Auslaufrohr des Heizrohres 18 mündet über ein Füllventil 19 in einen Vakuumverdampfer 20. Der Vakuumverdampfer 20 weist ein Ablassventil 21, eine Verbindungsleitung 22 und eine Abdampfleitung 23 auf. Die Verbindungsleitung 22 ist als Überlauf 16 im Sumpf 38 des Vakuumverdampfers 20 ausgebildet, durchquert einen Mikrowelleneinsatz 24 und mündet in eine Umwälzpumpe 25. In der Verbindungsleitung 22 ist ein weiteres Ablassventil 26 angeordnet. Von der Umwälzpumpe 25 wird gereinigter Trägerstoff 9 über eine Rücklaufleitung 27 wieder dem Absorptionsturm 1 zugeführt. Die Abgasleitung 23 des Vakuumverdampfers 20 ist über ein Filter 28 mit einer Vorvakuumpumpe 29 und einer Vakuumpumpe 30 verbunden. Verdichteter Abdampf wird von der Vakuumpumpe durch ein Rohrleitungssystem durch den Vorwärmer und Kondensator 12 in einen Wasserabscheider 31 geleitet. Im Wasserabscheider 31 ist eine Kühlschlange 32 eingebaut, durch welche über einen Kühlwasser-Einlass 33 und einen Kühlwasser-Auslass 34 Kühlwasser zirkuliert und das Kondensat kühlt. Das Kondensat wird als Lösungsmittel 35 in einen Behälter 36 geleitet, während eventuell anfallendes Wasser von Zeit zu Zeit über ein Ablassventil 37 oder einen Überlauf 39 aus Wasserabscheider 31 entfernt wird.

Die beschriebene Einrichtung arbeitet wie folgt:

Rohgas wird durch den Rohgas-Einlass 2 in den Absorptionsturm 1 geleitet, wo es durch einen Trägerstoff, beispielsweise ein Waschöl, in verschiedenen Reinigungsstufen 5 von Schadstoffen gereinigt wird. Das gereinigte Gas wird durch den Abzug-Ventilator 4 abgezogen und über den Reingas-Auslass 3 an die Umwelt geleitet. Das Waschöl mit den absorbierten Schadstoffen sammelt sich im Sumpf 6 des Absorptionsturmes 1 und gelangt nach und nach über den Überlauf 10 in den Vorwärmer und Kondensator 12, wo es durch komprimierten Abdampf leicht vorgewärmt und durch das Heizrohr 18, weiter erwärmt, in den Vakuumverdampfer 20 geleitet wird. Im Vakuumverdampfer 20 werden durch die Vakuumpumpen 29, 30 bei niedriger Temperatur die Schadstoffe zum grössten Teil verdampft. Der Abdampf wird von den Vakuumpumpen 29, 30 abgezogen und gegen Atmosphäre verdichtet und im Vorwärmer und Kondensator 12 kondensiert und in flüssiger Form in den Wasserabscheider 31 geleitet. Das Kondensat fliesst als Lösungsmittel 35 kontinuierlich in einen Behälter 36; eventuell anfallendes Wasser wird von Zeit zu Zeit über das Ablassventil 37 oder den Überlauf 39 vom Wasserabscheider abgelassen. Das im Vakuumverdampfer 20 zurückbleibende Waschöl, welches noch gewisse absorbierte Schadstoffe aufweist, fliesst über den Überlauf 16 in die den Sumpf 38 des Vakuumverdampfers 20 durchdringende Verbindungsleitung 22 und wird durch den Mikrowelleneinsatz 24 geleitet. Der Mikrowelleneinsatz 24 erzeugt in der Verbindungsleitung 22 ein elektromagnetisches Wechselfeld. Beim Durchlauf eines Mediums durch dieses Mikrowellenfeld wird Wärme durch Dipolschwingungen der Moleküle erzeugt. Der Vorteil dieser Anwendung liegt darin, dass eine sehr schnelle Wärmeentwicklung im Medium selbst aufgebaut wird und keine Wärmeübertragung von aussen stattfindet, welche mit Verlusten durch Übertragungswärme oder Kontaktwärme verbunden ist. Dabei werden die im Waschöl noch vorhandenen letzten Schadstoffreste sofort verdampft und in den Vakuumverdampfer 20 zurückgeführt, ohne dass sich das Waschöl dabei wesentlich erwärmt. Der Wirkungsgrad eines Mikrowelleneinsatzes 24 ist allerdings verhältnismässig gering und beträgt nur ca. 50 %. Ein beispielsweise anstelle eines herkömmlichen Heizrohres 18 eingesetzter Mikrowelleneinsatz würde sich für die Erwärmung der Waschlösung vor dem Eintritt in den Vakuumverdampfer sehr schlecht eignen. Hingegen lohnt sich die erfindungsgemässe Anwendung eines zur herkömmlichen Vakuumverdampfung nachgeschalteten Mikrowelleneinsatzes zum Verdampfen der letzten Schadstoffreste aus dem Waschöl, da zum Erreichen eines einigermassen reinen Waschöles mit herkömmlichen Einrichtungen ein enormer technischer Aufwand erforderlich wäre. Das nun praktisch reine Waschöl wird durch die Umwälzpumpe 25 über den Rücklauf 27 wieder in den Absorptionsturm gepumpt und der geschlossene Kreislauf kann von neuem beginnen.

Es ist ohne weiteres denkbar, anstelle des Waschöles zur Absorption der Schadstoffe aus den Rohgasen auch einen staubfeinen porösen Stoff, beispielsweise Aktivkohle, als Trägerstoff einzusetzen und eine ähnlich aufgebaute Desorptionseinheit zur Regenerierung des Trägerstoffes vorzusehen.

## Patentansprüche

1. Regenerierungseinrichtung für einen Trägerstoff, zum Trennen eines vom Trägerstoff absorbierten Schadstoffes, wobei die Einrichtung einen Vakuumverdampfer (20), einen Kondensator (31), eine Vakuumpumpe (29, 30), ein Füllventil (19), ein Ablassventil (21), eine für den Kreislauf vorgesehene Umwälzpumpe (25), und die nötigen Verbindungsleitungen aufweist, dadurch gekennzeichnet, dass an der den Vakuumverdampfer (20) mit der Umwälzpumpe (25) verbindenden Verbindungsleitung (22) ein zur Verdampfung der Schadstoffe geeigneter Mikrowelleneinsatz (24) angeordnet ist.

2. Regenerierungseinrichtung nach Anspruch 1, dadurch gekennzeichnet, dass die am Vakuumverdampfer (20) angeordnete Verbindungsleitung (22) einen das Niveau des Sumpfes (38) des Vakuumverdampfers (20) übersteigenden und die durch den Mikrowelleneinsatz (24) erzeugten Dämpfe in den Vakuumverdampfer (20) leitenden Überlauf (16) aufweist.

3. Regenerierungseinrichtung nach Anspruch 1, dadurch gekennzeichnet, dass die Verbindungsleitung (22) einen für die Mikrowellen des Mikrowelleneinsatzes (24) passierbaren Werkstoff aufweist.

4. Regenerierungseinrichtung nach Anspruch 1, dadurch gekennzeichnet, dass der Mikrowelleneinsatz (24) ein den Trägerstoff wenig beeinflussendes Mikrowellenfeld aufweist.

## Claims

1. Regenerating equipment for a carrier substance for the separation of a harmful substance absorbed by the carrier substance, wherein the equipment displays a vacuum evaporator (20), a condenser (31), a vacuum pump (29, 30), a filling valve (19), an outlet valve (21), a circulating pump (25) provided for the circuit and the necessary connecting ducts, characterised thereby, that a microwave insert (24), which is suitable for the evaporation of the harmful substances, is arranged at the connecting duct (22) connecting the vacuum evaporator (20) with the circulating pump (25).

2. Regenerating equipment according to claim 1, characterised thereby, that the connecting duct (22) arranged at the vacuum evaporator (20) displays an overflow (16) rising above the level of the sump (38) of the vacuum evaporator (20) and conducting the vapours produced by the microwave insert (24) into the vacuum evaporator (20).

3. Regenerating equipment according to claim 1, characterised thereby, that the connecting duct (22) displays a material permeable by the microwaves of the microwave insert (24).

4. Regenerating equipment according to claim 1, characterised thereby, that the microwave insert (24) displays a microwave field having little influence on the carrier substance.

## Revendications

1. Installation de régénération pour une substance porteuse en vue de la séparation d'une substance polluante absorbée par la substance porteuse, l'installation comportant un évaporateur à vide (20), un condenseur (31), une pompe à vide (29, 30), une soupape de remplissage (19), une soupape de décharge (21), une pompe de circulation (25) prévue pour le circuit ainsi que les conduits de raccordement nécessaires, caractérisée en ce qu'au conduit de raccordement (22) reliant l'evaporateur à vide (20) à la pompe de circulation (25) est disposé un agrégat à micro-ondes (24) qui convient à l'évaporation des substances polluantes.

2. Installation de régénération selon la revendication 1, caractérisée en ce que le conduit de raccordenent (22) disposé à l'évaporateur à vide (20) comporte un trop-plein (16) dépassant le niveau de substance (38) au fond de l'évaporateur à vide (20) et conduisant dans l'évaporateur à vide (20) les vapeurs produites par l'agrégat à micro-ondes (24).

3. Installation de régénération selon la revendication 1, caractérisée en ce que le conduit de raccordement (22) comporte une matière permeable aux micro-ondes de l'agrégat à micro-ondes (24).

4. Installation de régénération selon la revendication 1, caractérisée en ce que l'agrégat à micro-ondes (24) comporte un champ de micro-ondes influençant peu la substance porteuse.

# Fig. 1